# FASCICULE DE BREVET EUROPEEN

(11) **EP 1 232 891 B1**
(45) Date de publication et mention de la délivrance du brevet: **14.06.2006**
(21) Numéro de dépôt: 02290392.6
(22) Date de dépôt: 19.02.2002
(51) Int. Cl.: B60K 6/02, B60K 6/04

(54) **Système de transmission de mouvement pour véhicules à propulsion hybride**
Bewegungsübertragungsvorrichtung für Hybridfahrzeuge
Motion transmitting system for hybrid vehicles

(30) Priorité: 19.02.2001 FR 0102214
(43) Date de publication de la demande: 21.08.2002
(73) Titulaire: Peugeot Citroen Automobiles SA, 92200 Neuilly sur Seine (FR)
(72) Inventeur: Jouve, Pierre-André Jacques Damien, 92290 Chatenay-Malabry (FR); Petiot, Jean-Paul, 91460 Marcoussis (FR)
(74) Mandataire: Le Forestier, Eric

(56) Documents cités:
- EP-A- 0 348 622
- DE-A- 19 530 231
- DE-A- 19 945 473
- FR-A- 2 689 821
- FR-A- 2 772 675
- JP-A- 10 217 779

## Description

La présente invention concerne un système de transmission de mouvement pour un véhicule à propulsion hybride.

Par l'expression "propulsion hybride", on entendra dans la présente description, et dans les revendications qui suivent, une propulsion qui est réalisée à partir d'un moteur thermique et/ou d'un moteur électrique, le véhicule étant équipé de ces deux types de moteur.

Le système de transmission qui fait l'objet de l'invention est du type comportant des lignes primaire et secondaire parallèles, à savoir une ligne primaire motrice et une ligne secondaire réceptrice du mouvement, laquelle entraîne un différentiel qui commande à son tour les roues motrices du véhicule.

Le moteur électrique d'un groupe motopropulseur hybride est généralement implanté dans la boîte de vitesses ou dans le carter d'embrayage, ou encore dans le carter de convertisseur si la boîte de vitesses est automatique.

Ceci permet d'assurer une liaison mécanique directe entre le moteur électrique et la boîte de vitesses. Cependant, ceci entraîne un allongement considérable de l'ensemble de la transmission, ce qui rend difficile l'implantation du groupe motopropulseur dans le bloc avant du véhicule.

Une telle implantation nécessite une restructuration parfois globale du groupe motopropulseur.

C'est pourquoi des solutions ont déjà été proposées pour augmenter la compacité.

On peut notamment citer le document FR-2689821-A qui décrit un groupe motopropulseur comportant un moteur thermique et un moteur électrique. Ce moteur électrique est monté au-dessus de la boîte de vitesses, dont l'arbre primaire est solidaire du moteur thermique. Le moteur électrique est par ailleurs accouplé à l'arbre secondaire de cette boîte de vitesses par l'intermédiaire de moyens réducteurs.

On peut également citer le document FR-2772675-A qui décrit un dispositif de transmission pour véhicules à propulsion hybride, dans lequel le moteur électrique est également disposé au-dessus de la boîte de vitesses dont l'arbre primaire est relié au moteur thermique. Par l'intermédiaire de pignons prévus dans le carter de la boîte de vitesses et de l'arbre primaire, la puissance motrice du moteur électrique peut être transmise à l'arbre secondaire de la boîte de vitesses.

Ainsi, les dispositifs prévus dans ces deux documents permettent d'éviter une liaison en rotation du moteur électrique en bout d'arbre, ce qui contribue à la compacité du dispositif, malgré la présence d'un moteur électrique.

Ceci permet également d'utiliser les boîtes de vitesses existantes en les adaptant et de réduire les échanges thermiques depuis le moteur thermique et la boîte de vitesses vers le moteur électrique.

Le document JP-10 217779 décrit un système de transmission pour véhicules à propulsion hybride, réalisée à partir d'un moteur thermique ou d'une machine électrique qui comporte une ligne primaire motrice et une ligne secondaire réceptrice du mouvement, ces deux lignes étant parallèles.

La ligne primaire comporte deux arbres portant chacun un pignon.

Ce système de transmission ne permet ainsi que deux rapports de vitesse, dont un seul rapport « électrique ».

Le document DE-199 45473-A décrit (voir la figure 16) un système de transmission pour véhicules à propulsion hybride selon le préambule de la revendication 1; réalisée à partir d'un moteur thermique et/ou d'une machine électrique qui comporte une ligne primaire motrice et une ligne secondaire réceptrice du mouvement, ces deux lignes étant parallèles.

La ligne primaire comporte un premier arbre menant entraîné en rotation par le moteur thermique et par l'intermédiaire d'un embrayage, ainsi qu'un deuxième arbre menant entraîné en rotation par la machine électrique.

L'arbre de la machine électrique est décalé de cette ligne primaire et la machine électrique entraîne le deuxième arbre menant grâce à un pignon correspondant au premier rapport de vitesse.

L'invention a pour but de proposer un système de transmission de mouvement du type ci-dessus indiqué qui améliore encore la compacité du système de transmission, tout en simplifiant la conception du système et en disposant de nombreux rapports de vitesse tant électriques que thermiques.

Dans ces conditions, ce système de transmission permet de développer un couple adapté aux conditions de circulation du véhicule, en particulier à la vitesse voulue, et qui offre de meilleures conditions de roulage.

Ainsi, l'invention concerne un système de transmission de mouvement pour véhicules à propulsion hybride, réalisée à partir d'un moteur thermique et/ou d'une machine électrique, qui comporte une ligne primaire et une ligne secondaire parallèles, à savoir une ligne primaire motrice et une ligne secondaire réceptrice du mouvement, la ligne primaire comportant un premier arbre menant entraîné en rotation par le moteur thermique et par l'intermédiaire d'un embrayage et un deuxième arbre menant entraîné en rotation par la machine électrique dont l'arbre est décalé de cette ligne primaire, ledit deuxième arbre menant comportant au moins deux pignons de diamètres différents, correspondant à deux rapports de vitesse différents et destinés à coopérer avec des pignons de la ligne secondaire, les premiers et deuxièmes arbres menants étant coaxiaux et mutuellement libres en rotation, les deux arbres menants pouvant être liés en rotation par l'intermédiaire de moyens manoeuvrables. Des moyens de liaison en rotation de la ligne primaire et de la machine électrique assurent l'entraînement en rotation du deuxième arbre menant par la machine électrique, ces moyens de liaison étant indépendants desdits au moins deux pignons du deuxième arbre menant.

Selon l'invention, Les deux pignons du deuxième arbre menant sont en prise directe avec les pignons de la ligne secondaire et les moyens de liaison sont situés en extrémité de la ligne primaire, à l'extérieur du carter du système de transmission.

De préférence, le deuxième arbre menant s'étend du côté opposé audit moteur thermique.

Dans une première variante de réalisation, le deuxième arbre menant entoure coaxialement le premier arbre menant.

Dans une deuxième variante de réalisation, le deuxième arbre menant est dans le prolongement du premier arbre menant.

Le système de transmission selon l'invention peut avantageusement comprendre des moyens de crabotage des premier et deuxième arbres menants.

De préférence, le premier arbre menant porte au moins quatre pignons de diamètres différents.

L'invention concerne également un groupe motopropulseur pour véhicules à propulsion hybride comprenant un moteur thermique et une machine électrique disposée à la périphérie du système de transmission du véhicule, ce système de transmission étant conforme à ceux décrits précédemment.

De préférence, l'arbre de la machine électrique est parallèle à la ligne primaire du système de transmission.

Par ailleurs, la machine électrique est avantageusement située au-dessus du carter de système de transmission et peut également être directement fixée sur ce carter.

L'invention sera mieux comprise et d'autres buts, avantages et caractéristiques de celle-ci apparaîtront plus clairement de la description qui suit et qui est faite en référence aux dessins annexés représentant des exemples non limitatifs de réalisation de l'invention et sur lesquels:
- la figure 1 est une vue générale, schématique, d'une première variante de réalisation du système de transmission selon l'invention et
- la figure 2 est une vue générale schématique, d'une deuxième variante du système de transmission selon l'invention.

Les éléments communs aux deux figures seront désignés par les mêmes références.

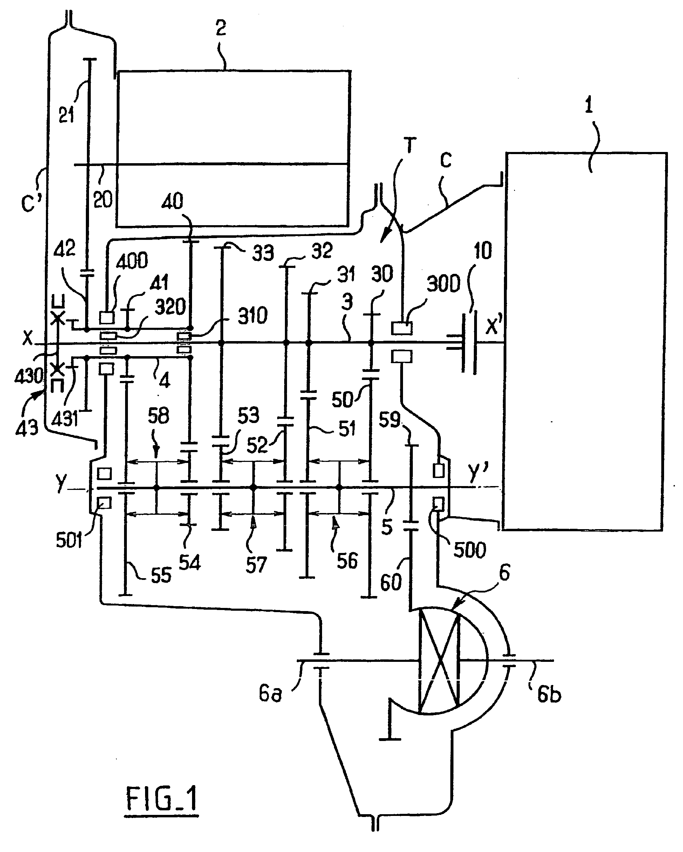

Sur la figure 1, sont désignés par les références XX' et YY' les lignes primaire, et respectivement, secondaire du système de transmission T.

Ces deux lignes sont parallèles, disposées à proximité l'une de l'autre. Dans l'exemple illustré, la ligne primaire XX' est placée au-dessus de la ligne secondaire YY'.

Le moteur thermique, qui est par exemple un moteur à quatre temps, à essence ou du type diesel, porte la référence 1, tandis que la machine électrique porte la référence 2.

La machine électrique 2 est fixée directement sur le carter C du système de transmission T, par des moyens appropriés qui ne sont pas illustrés sur la figure.

La machine électrique est disposée au-dessus des lignes primaire et secondaire, son arbre de sortie 20 étant sensiblement parallèle aux lignes primaire et secondaire.

L'invention n'est bien sûr pas limitée à ce mode de réalisation, la machine électrique pouvant être disposée différemment par rapport au système de transmission, étant entendu qu'elle n'est pas située en bout de la ligne primaire XX', ni reliée à elle par une liaison directe, mais à un endroit quelconque de la périphérie, par exemple au-dessus ou sur le côté du système de transmission. Ainsi, son arbre de sortie 20 est nécessairement décalé par rapport aux lignes primaire et secondaire et le système de transmission comporte des moyens de liaison en rotation de la machine électrique et de la ligne primaire.

Pour réduire l'encombrement de l'ensemble, le diamètre de la machine électrique 2 est inférieur à sa longueur.

La ligne primaire XX' est constituée d'un premier arbre menant 3 et d'un deuxième arbre menant tubulaire 4.

L'arbre 3 est entraîné en rotation par le moteur thermique 1 dont le vilebrequin est accouplé axialement avec l'arbre 3, et ceci par l'intermédiaire d'un embrayage 10 de type connu.

Dans sa portion d'extrémité qui est opposée à l'extrémité comportant l'embrayage 10, cet arbre 3 est entouré coaxialement par le deuxième arbre menant 4. L'arbre creux ou tubulaire 4 est donc traversé par le premier arbre menant 3 et il est libre en rotation par rapport à ce dernier.

Ce deuxième arbre menant 4 est notablement plus court que le premier arbre menant 3, celui-ci comportant entre l'embrayage 10 et le deuxième arbre menant 4 quatre pignons de diamètres différents 30, 31, 32 et 33.

Le deuxième arbre menant 4 est, quant à lui, entraîné en rotation par la machine électrique 2 par l'intermédiaire du pignon 42, lui-même entraîné en rotation par le pignon 21 solidaire de l'arbre 20 de sortie de la machine électrique 2.

Dans cet exemple de réalisation, les pignons 21 et 42 sont placés à l'intérieur d'un carter C' qui prend appui sur la machine électrique 2 et sur le carter C.

Le deuxième arbre menant 4 porte une paire de pignons 40, 41, de diamètres différents.

Dans l'exemple illustré sur la figure 1, tous les pignons portés par le premier arbre menant 3 ou le deuxième arbre menant 4 sont immobilisés sur leur arbre porteur, aussi bien en rotation qu'en translation.

Des organes appropriés, tels que des paliers à roulement référencés 300, 310, 320 et 400, assurent le guidage en rotation des deux arbres 3 et 4 de la ligne primaire XX'.

Ainsi, le palier 300 réalise le guidage d'une extrémité de l'arbre 3, du côté de l'embrayage 10, tandis que le palier 400 assure le guidage du deuxième arbre menant 4. Ces deux paliers 300 et 400 sont portés par le carter C.

Le deuxième arbre menant 4 est lui-même guidé en rotation sur le premier arbre menant central 3, au moyen des paliers 310 et 320, si bien que les deux arbres 3 et 4 sont parfaitement guidés en rotation.

Par ailleurs, le premier arbre menant 3 supporte, en porte-à-faux par rapport au carter C, le baladeur 430 d'un crabot 43. Le baladeur comporte des dents non illustrées sur la figure.

Le deuxième arbre menant 4 supporte, à son extrémité opposée au pignon 40, les dents 431 du crabot 43.

Lorsque l'on souhaite lier le premier arbre menant 3 et le deuxième arbre menant 4, on fait coopérer les dents du baladeur 430 et les dents 431 du crabot comme cela sera expliqué ultérieurement.

La ligne secondaire YY' comporte un arbre mené 5, guidé en rotation dans des paliers 500, 501 à ses deux extrémités, et convenablement immobilisé en translation.

Les deux paliers 500 et 501 sont portés par le carter C.

L'arbre 5 porte trois paires de pignons 50, 51; 52, 53 et 54, 55 qui sont chacun en prise avec un pignon 30, 31, 32, 33, 40, respectivement 41 de la ligne primaire XX'.

Les pignons 50 à 55 sont normalement montés fous sur l'arbre 5.

Il est prévu un crabot 56, 57, respectivement 58, interposé entre chaque paire de pignons 50, 51; 52,53; respectivement 54, 55, et solidaire en rotation de l'arbre 5.

Par exemple, par déplacement du crabot 56, dans un sens ou dans l'autre, suivant la direction longitudinale YY', il est possible de solidariser en rotation ce crabot 56 et, corrélativement, l'arbre 5, avec l'un des deux pignons 50 ou 51, ceci de manière sélective.

Le fonctionnement est similaire en ce qui concerne les crabots 57 et 58.

Par ailleurs, l'arbre 5 porte un pignon 59 qui est situé entre le pignon 50 et le palier 500. Ce pignon 50 engrène avec la couronne 60 du différentiel 6.

Le différentiel 6 entraîne deux demi essieux 6a, 6b qui portent chacun l'une des roues motrices du véhicule.

Le système de transmission qui vient d'être décrit permet de disposer de quatre vitesses différentes, avec une traction thermique et deux autres vitesses, avec une traction électrique. Il forme, de plus, avec la machine électrique et le moteur thermique un ensemble compact du fait du positionnement particulier de la machine électrique.

Le système de transmission comporte plusieurs modes de fonctionnement.

Tout d'abord, le démarrage du moteur thermique 1 peut être assuré par la machine électrique 2.

Pour cela, il suffit de lier le premier arbre menant 3 et le deuxième arbre menant 4 de la ligne primaire XX', au moyen du crabot 43, l'embrayage 10 étant fermé.

Par ailleurs, en mode de fonctionnement électrique, le moteur thermique 1 est arrêté et l'embrayage 10 est débrayé.

Lorsque les deux arbres menants 3 et 4 sont décrabotés, deux rapports de vitesse sont disponibles par l'intermédiaire des pignons 40, 41 et 54, 55.

Le véhicule peut également bénéficier de six rapports de marche, lorsque les deux arbres menants 3 et 4 sont crabotés.

En mode de fonctionnement thermique, les deux arbres menants 3 et 4 sont décrabotés pour ne pas entraîner à vide la machine électrique.

Le véhicule bénéficie alors de quatre rapports de marche par l'intermédiaire des pignons 30 à 33, selon que l'on solidarise un des quatre pignons fous 50 à 53 portés par l'arbre mené 5 par l'intermédiaire d'un crabot 56,57 ou 58.

Dans la description qui précède, on a indiqué que les pignons 30 à 33, 40 et 41 portés par les deux arbres menants 3 et 4 étaient solidaires en rotation de ces arbres, tandis que les pignons 50 à 55 portés par l'arbre mené 5 étaient des pignons fous.

L'invention n'est pas limitée à ce mode de réalisation et certains pignons portés par un des arbres menants pourraient être montés fous. Dans ce cas, le pignon correspondant sur l'arbre mené 5 est solidaire de cet arbre.

Par ailleurs, la répartition des pignons sur les deux arbres menants 3 et 4 pourrait être différente, le nombre de pignons portés par le deuxième arbre menant 4 étant cependant de préférence au moins égal à deux.

Enfin, la liaison en rotation entre l'arbre 20 du rotor 2 et le deuxième arbre menant 4 peut être réalisée par d'autres moyens que les deux pignons 21 et 42 décrits précédemment. Cette liaison pourrait notamment être réalisée au moyen de chaînes, de courroies, de pignons ou de tout autre moyen approprié.

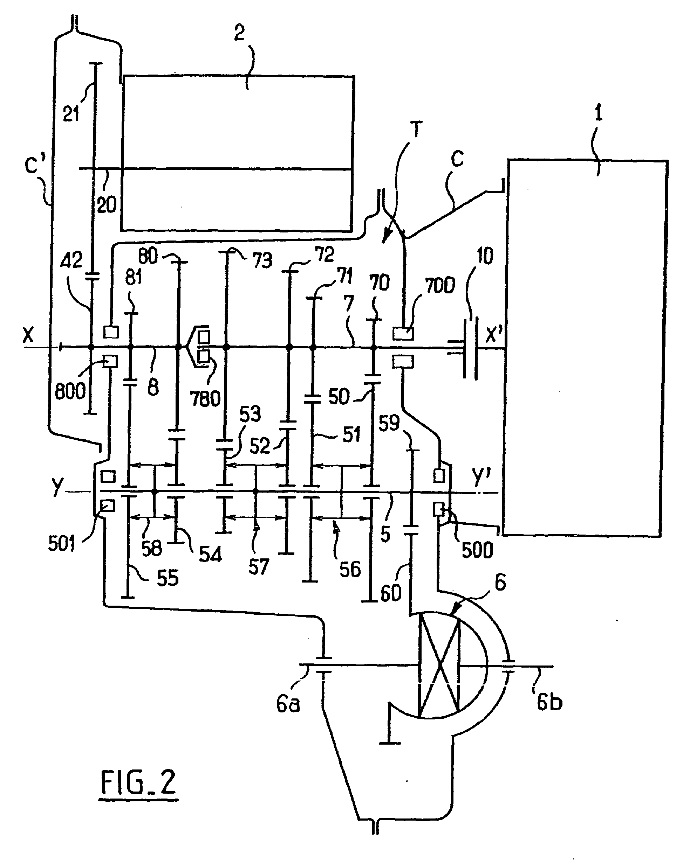

On se réfère maintenant la figure 2 qui illustre une deuxième variante de réalisation du système de transmission T selon l'invention.

Cette variante de réalisation diffère de celle qui a été décrite en référence à la figure 1 par la structure des deux arbres menants de la ligne primaire XX'.

Ainsi, le deuxième arbre menant 8 s'étend, du côté opposé à l'embrayage 10, dans le prolongement du premier arbre menant 7, c'est à dire en bout de cet arbre 7.

Le premier arbre menant 7 porte toujours deux paires de pignons 70, 71 et 72, 73 qui sont destinés à coopérer avec les pignons correspondants 50 à 53 situés sur la ligne secondaire YY'.

Le deuxième arbre menant 8 porte également deux pignons 80, 81 qui sont destinés à coopérer avec les pignons 54 et 55 de la ligne secondaire YY'.

Des organes appropriés, tels que des paliers de roulement référencés 700, 780 et 800 assurent le guidage en rotation des deux arbres menants 7 et 8.

Les paliers 700 et 800 sont portés par le carter C de la transmission T, tandis que le palier 780 permet la rotation relative des deux arbres menants 7 et 8.

Comme expliqué précédemment au regard de la figure 1, cette transmission peut fonctionner selon plusieurs modes différents et, en particulier, en liant les deux arbres 7 et 8 par des moyens appropriés, la machine électrique 2 peut servir à démarrer le moteur thermique 1.

Les éléments communs à ces deux variantes du système de transmission ne seront pas de nouveau décrits ici.

Dans cette deuxième variante, le système de transmission selon l'invention présente les mêmes avantages qu'indiqués précédemment, compacité accrue et possibilité de disposer de vitesses différentes avec une traction thermique et une traction électrique.

Dans les deux variantes de réalisation, le fait de lier les deux arbres menants 3 et 4 ou 7 et 8 permet à la puissance de transiter entre le moteur thermique et la machine électrique sans passer par l'arbre mené 5.

Dans les deux variantes de réalisation qui viennent d'être décrites, les deux arbres menants du système de transmission sont situés dans le même carter et peuvent donc avoir un circuit de graissage commun.

Par contre, à chaque arbre menant est associé un actionneur commandé par un calculateur, ces actionneurs étant indépendants l'un de l'autre.

Les signes de référence insérés après les caractéristiques techniques figurant dans les revendications ont pour seul but de faciliter la compréhension de ces dernières et ne sauraient en limiter la portée.

## Revendications

1. Système de transmission de mouvement pour véhicules à propulsion hybride, réalisée à partir d'un moteur thermique (1) et/ou d'une machine électrique (2), qui comporte une ligne primaire (XX') et une ligne secondaire (YY') parallèles, à savoir une ligne primaire (XX') motrice et une ligne secondaire (YY') réceptrice du mouvement, la ligne primaire (XX') comportant un premier arbre menant (3,7) entraîné en rotation par le moteur thermique (1) et par l'intermédiaire d'un embrayage (10) et un deuxième arbre menant (4,8) entraîné en rotation par la machine électrique (2) dont l'arbre est décalé de cette ligne primaire, ledit deuxième arbre menant comportant au moins deux pignons de diamètres différents (40,41; 80,81), correspondant à deux rapports de vitesse différents et destinés à coopérer avec des pignons (54, 55) de la ligne secondaire (YY'), les premiers et deuxièmes arbres menants étant coaxiaux et mutuellement libres en rotation, les deux arbres menants (3, 4 ;7, 8) pouvant être liés en rotation par l'intermédiaire de moyens manoeuvrables (43), des moyens de liaison en rotation (21,42) de la ligne primaire (XX') et de la machine électrique (2) assurant l'entraînement en rotation du deuxième arbre menant (4,8) par la machine électrique (2), ces moyens de liaison étant indépendants desdits au moins deux pignons (40, 41 ; 80, 81) du deuxième arbre menant, **caractérisé en ce que** les deux pignons du deuxième arbre menant (4, 8) sont en prise directe avec les pignons (54, 55) de la ligne secondaire (YY') et **en ce que** les moyens de liaison (21, 42) sont situés en extrémité de la ligne primaire (XX'), à l'extérieur du carter (C) du système de transmission (T).

2. Système de transmission selon la revendication 1, **caractérisé en ce que** le deuxième arbre menant (4, 8) s'étend du côté opposé au moteur thermique (1).

3. Système de transmission selon la revendication 2, **caractérisé en ce que** le deuxième arbre menant (4) entoure coaxialement le premier arbre menant (3).

4. Système de transmission selon la revendication 2, **caractérisé en ce que** le deuxième arbre menant (8) est dans le prolongement du premier arbre menant (7).

5. Système de transmission selon l'une des revendications 1 à 4, **caractérisé en ce qu'**il comprend des moyens de crabotage (43) des premier et deuxième arbres menants (3, 4).

6. Système de transmission selon l'une des revendications 1 à 5, **caractérisé en ce que** le premier arbre menant (3, 7) porte au moins quatre pignons (30, 31, 32, 33; 70, 71, 72, 73) de diamètres différents.

7. Groupe motopropulseur pour véhicules à propulsion hybride comprenant un moteur thermique (1) et une machine électrique (2) disposée à la périphérie du système de transmission (T) du véhicule, conforme à l'une des revendications 1 à 6.

8. Groupe motopropulseur selon la revendication 7, **caractérisé en ce que** l'arbre (20) de la machine électrique (2) est parallèle à la ligne primaire (XX') du système de transmission (T).

9. Groupe motopropulseur selon la revendication 7 ou 8, **caractérisé en ce que** la machine électrique (2) est située au-dessus du carter (C) du système de transmission (T).

10. Groupe motopropulseur selon l'une revendication 7 à 9, **caractérisé en ce que** la machine électrique (2) est fixée au carter (C) du système de transmission (T).

## Claims

1. Motion transmission system for hybrid-propulsion vehicles whose propulsion is provided by an internal combustion engine (1) and/or an electric machine (2), which comprises a primary line (XX') and a secondary line (YY') which are parallel, namely a primary driveline (XX') and a secondary line (YY') which receives the motion, the primary line (XX') comprising a first drive shaft (3, 7) rotated by the internal combustion engine (1) and via a clutch (10) and a second drive shaft (4, 8) rotated by the electric machine (2), whose shaft is offset with respect to this primary line, the said second drive shaft comprising at least two pinions (40, 41; 80, 81) of different diameters, corresponding to two different gear ratios and intended to cooperate with pinions (54, 55) of the secondary line (YY'), the first and second drive shafts being coaxial and mutually free in rotation, the two drive shafts (3, 4; 7, 8) being able to be connected rotationally via controllable means (43), means (21, 42) for rotationally connecting the primary line (XX') and the electric machine (2) ensuring that the second drive shaft (4, 8) is rotated by the electric machine (2), these connecting means being independent of the said at least two pinions (40, 41; 80, 81) of the second drive shaft, **characterized in that** the two pinions of the second drive shaft (4, 8) are in direct engagement with the pinions (54, 55) of the secondary line (YY') and **in that** the connecting means (21, 42) are situated at the end of the primary line (XX'), outside the housing (C) of the transmission system (T).

2. Transmission system according to Claim 1, **characterized in that** the second drive shaft (4, 8) extends on the side opposed to the internal combustion engine (1).

3. Transmission system according to Claim 2, **characterized in that** the second drive shaft (4) surrounds the first drive shaft (3) coaxially.

4. Transmission system according to Claim 2, **characterized in that** the second drive shaft (8) is in the continuation of the first drive shaft (7).

5. Transmission system according to one of Claims 1 to 4, **characterized in that** it comprises dog-clutch means (43) for coupling the first and second drive shafts (3, 4).

6. Transmission system according to one of Claims 1 to 5, **characterized in that** the first drive shaft (3, 7) bears at least four pinions (30, 31, 32, 33; 70, 71, 72, 73) of different diameters.

7. Drive train for hybrid-propulsion vehicles, comprising an internal combustion engine (1) and an electric machine (2) arranged at the periphery of the vehicle transmission system (T) according to one of Claims 1 to 6.

8. Drive train according to Claim 7, **characterized in that** the shaft (20) of the electric machine (2) is parallel to the primary line (XX') of the transmission system (T).

9. Drive train according to Claim 7 or 8, **characterized in that** the electric machine (2) is situated above the housing (C) of the transmission system (T).

10. Drive train according to one of Claims 7 to 9, **characterized in that** the electric machine (2) is fastened to the housing (C) of the transmission system (T).

## Patentansprüche

1. Kraftübertragungssystem für Fahrzeuge mit Hybridantrieb, der auf der Basis eines Verbrennungsmotors (1) und/oder einer Elektromaschine (2) ausgeführt ist, das einen Primärstrang (XX') und einen parallelen Sekundärstrang (YY') umfaßt, und zwar einen primären Antriebsstrang (XX') und einen Sekundärstrang (YY') zur Kraftaufnahme, wobei der Primärstrang (XX') folgendes umfaßt: eine erste Antriebswelle (3, 7), die durch den Verbrennungsmotor (1) und über eine Kupplung (10) rotationsmäßig angetrieben wird, und eine zweite Antriebswelle (4, 8), die durch die Elektromaschine (2) rotationsmäßig angetrieben wird, deren Welle gegenüber dem Primärstrang versetzt ist, wobei die zweite Antriebswelle wenigstens zwei Zahnräder verschiedenen Durchmessers (40, 41; 80, 81) umfaßt, die zwei verschiedenen Übersetzungsverhältnissen entsprechen und dafür bestimmt sind, mit Zahnrädern (54, 55) des Sekundärstrangs (YY') zusammenzuarbeiten, wobei die ersten und zweiten Antriebswellen koaxial und gegeneinander frei drehbar sind, wobei die beiden Antriebswellen (3, 4; 7, 8) über betätigbare Mittel (43) rotationsmäßig verbunden werden können, wobei Mittel zur rotationsmäßigen Verbindung (21, 42) des Primärstrangs (XX') und der Elektromaschine (2) den rotationsmäßigen Antrieb der zweiten Antriebswelle (4, 8) durch die Elektromaschine (2) sicherstellen, wobei diese Verbindungsmittel von den wenigstens zwei Zahnrädern (40, 41; 80, 81) der zweiten Antriebswelle unabhängig sind, **dadurch gekennzeichnet, daß** die beiden Zahnräder der zweiten Antriebswelle (4, 8) im direkten Eingriff mit den Zahnrädern (54, 55) des Sekundärstrangs (YY') sind und **dadurch**, daß die Verbindungsmittel (21, 42) am Ende des Primärstrangs (XX') angeordnet sind, außerhalb des Gehäuses (C) des Übertragungssystems (T).

2. Übertragungssystem nach Anspruch 1, **dadurch gekennzeichnet, daß** die zweite Antriebswelle (4, 8) sich auf der dem Verbrennungsmotor (1) gegenüberliegenden Seite befindet.

3. Übertragungssystem nach Anspruch 2, **dadurch gekennzeichnet, daß** die zweite Antriebswelle (4) die erste Antriebswelle (3) koaxial umgibt.

4. Übertragungssystem nach Anspruch 2, **dadurch gekennzeichnet, daß** die zweite Antriebswelle (8) in der Verlängerung der ersten Antriebswelle (7) liegt.

5. Übertragungssystem nach einem der Ansprüche 1 bis 4, **dadurch gekennzeichnet, daß** es Klauenkupplungsmittel (43) der ersten und zweiten Antriebswelle (3, 4) umfaßt.

6. Übertragungssystem nach einem der Ansprüche 1 bis 5, **dadurch gekennzeichnet, daß** die erste Antriebswelle (3, 7) wenigstens vier Zahnräder (30, 31, 32, 33; 70, 71, 72, 73) verschiedenen Durchmessers trägt.

7. Antriebsgruppe für Fahrzeuge mit Hybridantrieb, umfassend einen Verbrennungsmotor (1) und eine am Rand des Übertragungssystems (T) des Fahrzeugs gemäß einem der Ansprüche 1 bis 6 angeordnete Elektromaschine (2).

8. Antriebsgruppe nach Anspruch 7, **dadurch gekennzeichnet, daß** die Welle (20) der Elektromaschine (2) parallel zum Primärstrang (XX') des Übertragungssystems (T) ist.

9. Antriebsgruppe nach Anspruch 7 oder 8, **dadurch gekennzeichnet, daß** die Elektromaschine (2) sich über dem Gehäuse (C) des Übertragungssystems (T) befindet.

10. Antriebsgruppe nach einem der Ansprüche 7 bis 9, **dadurch gekennzeichnet, daß** die Elektromaschine (2) am Gehäuse (C) des Übertragungssystems (T) befestigt ist.
